# EUROPEAN PATENT SPECIFICATION

(11) **EP 3 275 737 B1**
(45) Date of publication and mention of the grant of the patent: **11.09.2019**
(21) Application number: 16181545.1
(22) Date of filing: 27.07.2016
(51) Int. Cl.: B60R 21/203

(54) **A MOUNTING ARRANGEMENT**
MONTAGEANORDNUNG
AGENCEMENT DE MONTAGE

(43) Date of publication of application: 31.01.2018
(73) Proprietor: Autoliv Development AB, 447 83 Vårgårda (SE)
(72) Inventor: BURGER, Michael, D-857 57 Karlsfeld (DE); KRANZLE, Armin, DE-86911 Diessen (DE)
(74) Representative: Rusby-Gale, Daniel Matthew

(56) References cited:
- WO-A1-2013/154282
- ES-A1- 2 135 999
- US-A- 5 508 481

## Description

The present invention relates to a mounting arrangement and more particularly relates a mounting arrangement for mounting an air-bag module within a vehicle.

A vehicle air-bag module typically comprises a mounting arrangement to mount the air-bag module to a support structure within a vehicle. For instance, a driver's air-bag module comprises a mounting arrangement to mount the air-bag module to the hub of a steering wheel.

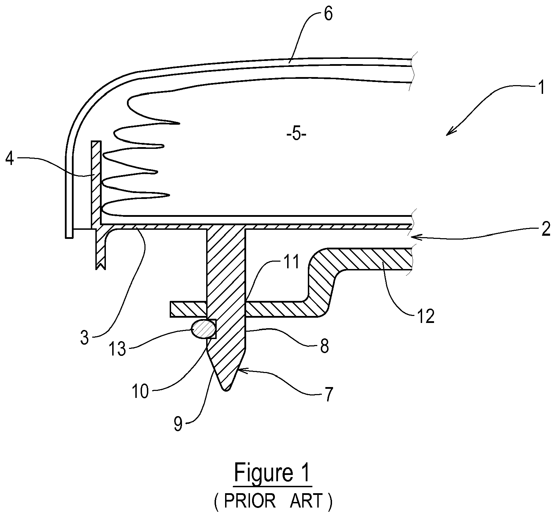

Figure 1 of the accompanying drawings shows part of a conventional air-bag module 1. The air-bag module 1 comprises a housing 2 which incorporates a generally planar base 3 and a side wall 4. The housing 2 houses a folded air-bag 5. A cover 6 is attached to the housing 2 and extends over the folded air-bag 5 to cover the folded air-bag 5.

A mounting pin 7 is attached to the base 3 of the housing 2 and projects downwardly from the base 3. The mounting pin 7 is of metal and comprises a body portion 8 which is attached, at one end, to the base 3 of the housing 2. The other end of the mounting pin 7 comprises a generally conical-shaped end portion 9. The body portion 8 of the mounting pin 7 comprises a locking recess 10.

When the air-bag module 1 is mounted within a vehicle, the mounting pin 7 extends through a mounting aperture 11 in a support structure 12 which forms part of the vehicle. In the case of a driver's air-bag, the support structure 12 is part of a steering wheel.

A retainer element 13, such as an omega spring, is attached to the air-bag module 1 so that part of the retainer element 13 sits within the locking recess 10 in the mounting pin 7. The retainer element 13 retains the air-bag module 1 in positon on the support structure 12.

The contact between the metal retainer element 13 and the metal mounting pin 7 can lead to an undesirable noise as the metal components are moved relative to one another by vibration from the vehicle's engine. In order to address this problem of vibrational noise, it has been proposed previously to clad the mounting pins of an air-bag module in plastic sleeves so that the retainer element contacts the plastic sleeves instead of the metal mounting pins. One such conventional arrangement is disclosed in US patent no. 6196573.

Plastic sleeves provide an effective solution to the problem of vibrational noise. However, the additional steps that are required to install the plastic sleeves increase the cost of manufacturing the air-bag module.

ES-A-2135999 discloses a conventional air-bag module mounting arrangement, wherein a plurality of separate attachment elements connect the base plate of the airbag module to the vehicle structure.

The present invention seeks to provide an improved air-bag module. According to one aspect of the present invention, there is provided a mounting arrangement as defined in claim 1 hereinafter.

In order that the invention may be more readily understood, and so that further features thereof may be appreciated, embodiments of the invention will now be described, by way of example, with reference to the accompanying drawings in which:
Figure 1 is a diagrammatic cross-sectional view of part of a conventional air-bag module,
Figure 2 is a diagrammatic cross-sectional view of an air-bag module,
Figure 3 is a diagrammatic perspective view of an attachment element of the air-bag module shown in figure 2,
Figure 4 is a diagrammatic perspective view of part of the attachment element shown in figure 3,
Figure 5 is a diagrammatic perspective view of an attachment arrangement comprising two attachment elements of an embodiment of the invention,
Figure 6 is a diagrammatic cross-sectional view of an air-bag module of the further embodiment of the invention comprising the attachment arrangement shown in figure 5,
Figure 7 is a diagrammatic perspective view of an attachment arrangement of a yet further embodiment of the invention,
Figure 8 is a diagrammatic cross-sectional view of part of an air-bag module of the yet further embodiment of the invention comprising the attachment arrangement as shown in figure 7,
Figure 9 is a diagrammatic cross-sectional view of part of an air-bag module comprising an intermediate element in the form of a horn plate, and
Figure 10 is a diagrammatic cross-sectional view of another attachment element.

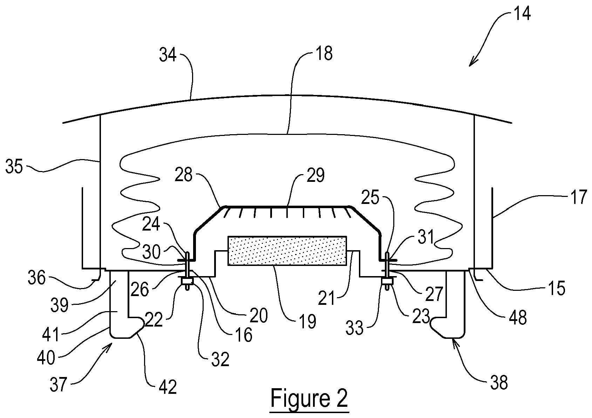

Referring now to figure 2 of the accompanying drawings, a mounting arrangement comprises an air-bag module 14 which incorporates a base element 15 that is a planar or generally planar element. The base element 15 is of metal and comprises a central aperture 16. A side wall 17 is carried by the base element 15 and extends around the periphery of the base element 15. The side wall 17 is of metal and is preferably formed integrally with the base element 15. In some embodiments, the air-bag module 14 comprises more than one side wall which may or may not be formed integrally with the base element 15.

The base element 15 and the side wall 17 together form a housing which at least partly houses a folded air-bag 18. The air-bag 18 is a driver's air-bag and the air-bag module 14 is configured to be mounted to part of the hub of a steering wheel which forms a support structure in the vehicle.

The air-bag module 14 comprises a gas generator 19 which is supported by two spaced apart support members 20, 21. The support members 20, 21 comprise respective fixing apertures 22, 23. A fixing element 24, 25 extends through each respective fixing aperture 22, 23 and through respective fixing apertures 26, 27 provided in the base element 15.

The support members 20, 21 which support the gas generator 19 comprise damper elements which damp the vibrational movement of the gas generator 19 within the air-bag module 49. The damper elements minimise vibration within the air-bag module 14 and minimise the risk of the gas generator 19 becoming loose within the air-bag module 14.

The air-bag module 14 further comprises a diffuser element 28 which is positioned adjacent to the gas generator 19. The diffuser element 28 comprises a planar or generally planar diffuser plate 29 body which is provided with diffuser apertures 29 that are configured to diffuse gas output from the gas generator 19. The diffuser element 28 comprises diffuser fixing apertures 30, 31 which receive the respective fixing elements 24, 25.

The fixing elements 24, 25 couple the diffuser element 28 and the support members 20, 21 of the gas generator 19 to the base element 15. A fixing device in the form of a screw nut 32, 33 is screwed onto one end of each of the fixing elements 24, 25 to retain the fixing elements 24, 25 in position. The screw nuts 32, 33 retain the diffuser element 28 and the support members 20, 21 in engagement with the base element 15.

The screw nuts 32, 33 are screwed onto the fixing elements 24, 25 from beneath underside the air-bag module 14 as the air-bag module 14 is assembled.

The air-bag module 14 further comprises a cover unit 34 which at least partly covers the folded air-bag 18. The cover unit 34 comprises a side wall 35 which has an outwardly directed lip 36 at one end. The outwardly directed lip 36 engages with part of the base element 15 to couple the cover unit 34 to the base element 15.

The mounting arrangement further comprises at least one elongate attachment element. The mounting arrangement comprises two elongate attachment elements 37, 38. However, in some embodiments, the mounting arrangement comprises more than two elongate attachment elements. In a preferred embodiment, the mounting arrangement comprises three elongate attachment elements.

For simplicity, the following description will refer only to the first elongate attachment element 37. However, it is to be appreciated that the description of the first elongate attachment element 37 also applies to the other attachment elements.

The attachment element 37 comprises a first end portion 39 which is carried by a support element which, in this arrangement, is the base element 15 of the air-bag module 14. The attachment element 37 further comprises a second end portion 40 which is coupled to the first end portion 39 by an intermediate portion 41 so that the second end portion 40 is positioned remotely from the base element 15.

The second end portion 40 comprises a retainer formation 42 which is of plastic. The retainer formation 42 is a substantially hook-shaped formation which projects outwardly from one side of the attachment element 37.

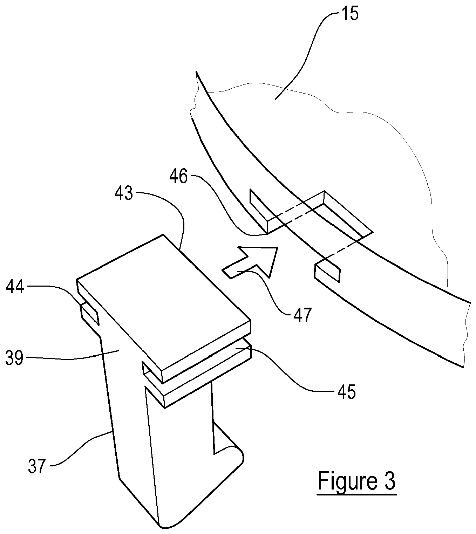

Referring now to figure 3 of the accompanying drawings, the first end portion 39 of the attachment element 37 comprises an enlarged end 43 that incorporates a pair of mounting channels 44, 45 that are positioned on either side of the attachment element 37.

The attachment element 37 is releasably attached to the base element 15 by inserting the first end portion 39 into a generally U-shaped retainer aperture 46 in the direction indicated by the arrow 47 in figure 3. The first end portion 39 of the attachment element 37 is received in the retainer aperture 46. Portions of the base element 15 on either side of the retainer aperture 46 are positioned in the retainer slots 44, 45 on the attachment element 37 to form an interference fit which releasably attaches the attachment element 37 to the base element 15.

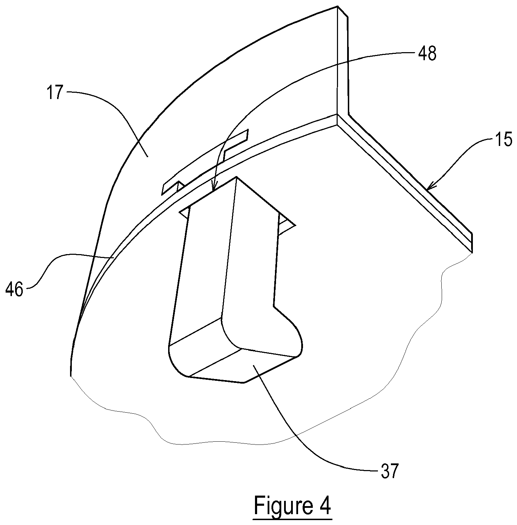

Referring now to figure 4 of the accompanying drawings, a locking plate is coupled to the base element 15. Part of the locking plate 48 engages an outer surface of the first end portion 39 of the attachment element 37 to retain the first end portion 39 within the retainer recess 46 in the base element 15. The locking plate 48 is therefore a locking element that retains the attachment element 37 in connection with the base element 15.

The attachment element 37 projects outwardly from the underside of the base element 15 and is configured to be received within a mounting aperture in a support structure in part of a vehicle. The second end portion 40 of the attachment element 37 projects through the mounting aperture in the support structure. A retainer element, such as an omega spring, engages the retainer formation 42 to retain the attachment element 37 and hence the air-bag module 14 in position on the support structure of the vehicle.

The retainer formation 42 is of plastic and so there is no metal-to-metal contact between the attachment element 37 and the retainer element. This minimises or avoids completely vibrational noise emanating from the contact between the metal retainer element and the attachment element 37.

The first end portion 39, the intermediate portion 41 the second end portion 48 and the retainer formation 42 are all of plastic and formed integrally with one another. The entire attachment element 37 is formed integrally as a single plastic component that is then releasably attached to the metal base element 15 during the assembly of the air-bag module 14.

The metal construction of the side wall 17 of the housing of the air-bag module 14 minimises the diameter of the air-bag module 14 compared with other air-bag modules where the housing is of plastic and the side wall needs to be thicker than the metal side wall 17 to achieve the same strength housing. This reduction in diameter is desirable since space is restricted within a vehicle, particularly within the hub of a steering wheel of a vehicle.

The combination of the plastic attachment element 37 and the metal side wall 17 enables the arrangement to have a minimal overall diameter, while also minimising or avoiding completely vibrational noise when air-bag module 14 is mounted to a support structure within a vehicle.

The use of the plastic attachment element 37 in an embodiment of the invention avoids the need to install plastic sleeves over a metal mounting pin. The cost of assembling an air-bag module comprising an embodiment of the invention is therefore lower than the cost of assembling a conventional air-bag module which requires the additional step of installing plastic sleeves.

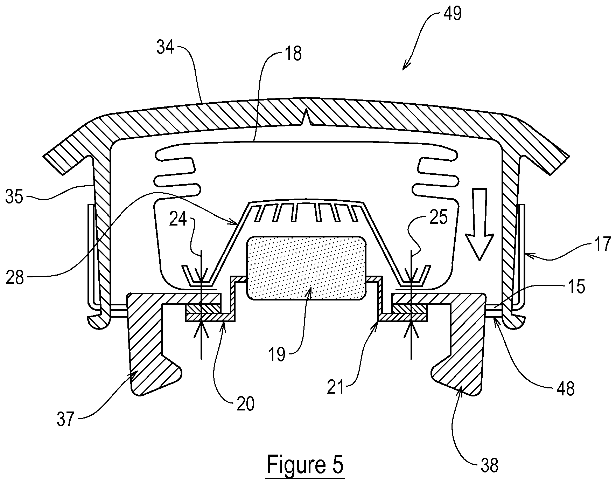

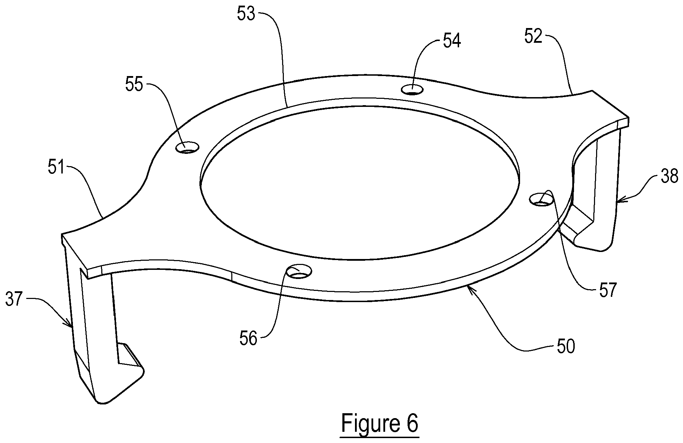

Referring now to figures 5 and 6 of the accompanying drawings, an air-bag module 49 of some embodiments comprises many of the same components as the air-bag module 14 described above. The same reference numerals are used for the same components in the two air-bag modules 14, 49.

The air-bag module 49 of some embodiments comprises first and second elongate attachment elements 37, 38 of the type described above. However, the attachment elements 37, 38 are carried by a central support portion 50, as shown in figure 6.

The elongate attachment elements 37, 38 of the mounting arrangement are carried by the central support portion 50. In this embodiment, the central support portion 50 is carried by the base element 15 of the air-bag module 14.

The central support portion 50 is a circular or generally circular planar element with outwardly directed support sections 51, 52 projecting from opposite sides of the central support portion 50. The attachments elements 37, 38 are carried respectively by the outwardly directed support portions 51, 52. The attachment elements 37, 38 project downwardly from the support portions 51, 52 on opposing sides of the central support portion 50.

The central support portion 50 comprises a central aperture 53 which is of the same or substantially the same diameter as the central aperture 16 in the base element 15. The central support portion 50 further comprises four fixing apertures 54-57 which are provided in the central support portion 50 around the periphery of the central aperture 53.

In this embodiment, the central support portion 50 is of plastic and is formed integrally with the attachment elements 37, 38. The central support portion 50 and the attachment elements 37, 38 are formed integrally as one plastic unit which is then fixed within the air-bag module 49 when the air-bag module 49 is assembled.

Fixing elements 24-25 and additional fixing elements (not shown) extend through the fixing apertures 54-57 in the central support portion 50 and through corresponding fixing apertures in the base element 15 and the diffuser element 28 to fix the components to one another.

In this embodiment, the locking plate 48 which retains the cover element 34 in connection with the base element 15 is not required to also retain the attachment elements 37, 38 in position. The attachment elements 37, 38 are carried by the central support portion 50 which is fixed to the base element 15 and which holds the attachment elements 37, 38 in position.

In this embodiment, two attachment elements 37, 38 are carried by the central support portion 50. However, in other embodiments, there is more than two attachment elements carried by the central support portion 50. In a preferred embodiment, there are three attachment elements carried by the central support 50.

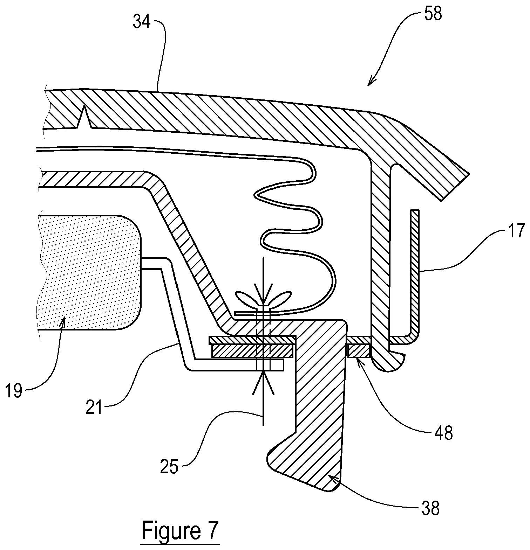

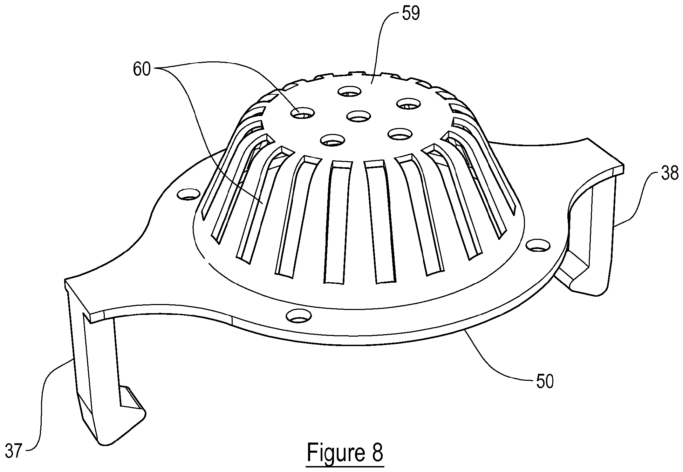

Referring now to figures 7 and 8 of the accompanying drawings, a mounting arrangement of a yet further embodiment of the invention comprises an air-bag module 58 that is provided with many of the same components as the air-bag modules 14, 49 as described above. The same reference numerals will be used for the same components in the air-bag modules 14, 49 and 58.

In this yet further embodiment, first and second attachment elements 37, 38 are carried by a central support portion 50, as described above. However, in this embodiment, the central support portion 50 further comprises a diffuser element 59. The diffuser element 59 is a generally dome-shaped structure which is provided with a plurality of diffuser apertures 60. The diffuser element 59 is formed integrally with the central support portion 50 and positioned to extend across the central aperture 53 in the central support portion 50. It is to be appreciated that the diffuser element 59 replaces the metal diffuser element 28 that is present in the embodiments described above.

The diffuser element 59 is of plastic and is formed integrally with the central support portion 50 and the attachment elements 37, 38. The diffuser element 59 is formed integrally of plastic, preferably in the same manufacturing step as the central support portion 50 and the attachment elements 37, 38. The single plastic element comprising the diffuser element 59, the central support portion 50 and the attachment elements 37, 38 is then fixed within the air-bag module 58 during assembly of the air-bag module 58.

In this yet further embodiment, the mounting arrangement comprises two attachment elements 37, 38. However, in other embodiments, the mounting arrangement comprises only one attachment element or more than two attachment elements. In a preferred embodiment, the mounting arrangement comprises three attachment elements.

In the embodiments described above, the air-bag module is configured to be mounted to a support structure within a vehicle, with the support structure being a part of the hub of a steering wheel. However, in other embodiments, the air-bag module is configured to be mounted to a support structure within a vehicle in the form of a horn plate. The horn plate carries an electrical contact which is configured to connect electrically with a horn within a vehicle. The air-bag module is mounted to the horn plate and the horn plate is then mounted within a vehicle.

In further embodiments, the air-bag module is configured to be mounted to a different support structure within a vehicle which may or may not form part of the steering wheel of the vehicle.

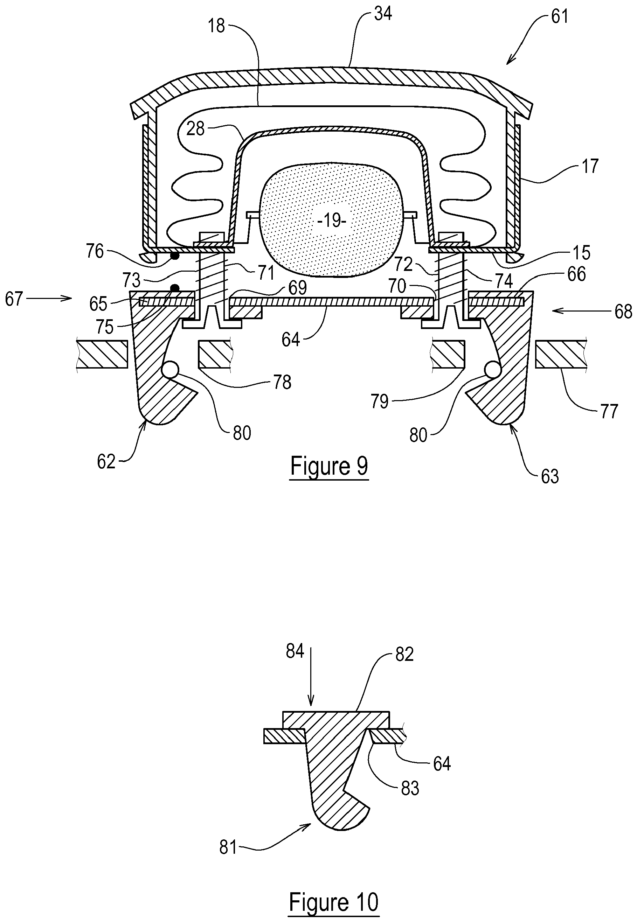

Referring now to figure 9 of the accompanying drawings, an air-bag module 61 comprises many of the same components as the air-bag module 14 described above. The same reference numerals are used for the same components in the two air-bag modules 14, 61.

The air-bag module 61 comprises first and second elongate attachment elements 62, 63 of the type described above. However, the attachment elements 62, 63 are carried by a support element in the form of a horn plate 64. The horn plate 64 is an intermediate element which is coupled to the base element 15 of the air-bag module 61.

The attachment elements 62, 63 are attached to the horn plate 64 by slotting an edge of the horn plate 64 into a recess 65, 66 provided in the first end portion of each respective attachment element 62, 63 in a direction parallel to the plane of the horn plate 64, as indicated by arrows 67, 68.

The horn plate 64 comprises mounting recesses 69, 70 which receive mounting pillars 71, 72. The mounting pillars 71, 72 are attached at one end to the horn plate 64 and attached at the other end to the base element 15 of the air-bag module 61. A spring 73, 74 is provided around each of the mounting pillars 71, 72 to bias the air-bag module 61 away from the horn plate 64. The lower end of the mounting pillars 71, 72 is moveable relative to the horn plate 64 such that the air-bag module 61 can be depressed downwardly, deforming the springs 73, 74 in a direction towards the horn plate 64.

The horn plate 64 carries at least one first electrical horn contact 75 and the air-bag module 61 carries at least one second electrical horn contact 76. When the air-bag module 61 is depressed in a direction towards the horn plate 64, the first and second electrical horn contacts 75, 76 contact one another and form an electrical connection which activates a horn in the vehicle.

The air-bag module 61 is therefore moveably mounted to the horn plate 64 and configured to be moved from a rest position in which the base element 15 of the air-bag module 61 is spaced apart from the horn plate 64 to a depressed position in which the electrical contacts 75, 76 contact one another.

The attachment elements 62, 63 attach the horn plate 64, which carries the air-bag module 61, to a part of a vehicle 77, such as a part of a steering wheel. The attachment elements 62, 63 extend through apertures 78, 79 provided in the part of the vehicle 77. A retainer element 80 engages the retainer formation of each of the attachment elements 62, 63 to retain to the horn plate 64 in position adjacent to the part of the vehicle 77.

Referring now to figure 10 of the accompanying drawings, another arrangement is identical to the arrangement shown in figure 9, except that each of the attachment elements 62, 63 is a stand-alone attachment element 81 (one of which is shown in figure 10). The attachment element 81 comprises an enlarged end 82 at the first end portion.

The attachment element 81 extends partly through an aperture 83 in the horn plate 64 with the enlarged end 82 being fixed in contact with an upper surface of the horn plate 64. The attachment element 81 is mounted to the horn plate 64 by inserting the attachment element 81 through the aperture 83 in the horn plate 64 in a direction generally perpendicular to the plane of the horn plate 64, as indicated by the arrow 84.

In some of the arrangements described above, an attachment element is carried by a support element in the form of the base element 15 of the air-bag module 14 or an intermediate element in the form of the horn plate 64. However, in another arrangement the attachment element is carried by a vehicle support structure, such as a part of a steering wheel, with the second end portion projecting outwardly from the vehicle support structure. The retainer formation at the second end portion of the attachment element extends through an aperture provided in an air-bag module. A retainer element engages the retainer formation to retain the air-bag module in a position adjacent to the vehicle support structure.

When used in this specification and claims, the terms "comprises" and "comprising" and variations thereof mean that the specified features, steps or integers are included. The terms are not to be interpreted to exclude the presence of other features, steps or components.

## Claims

1. A mounting arrangement for mounting an air-bag module to a vehicle support structure, the mounting arrangement comprising:
an air-bag module (14) which incorporates:
a base element (15);
a central support member (50) which is of plastic and which is carried by the base element (15); and
at least one side wall (17), the side wall (17) being of metal and being carried by the base element (15); and
a plurality of spaced apart elongate attachment elements (37, 38) which each incorporate:
a first end portion (39) which is formed integrally with the central support member (50); and
a second end portion (40) which is coupled to the first end portion (39) by an intermediate portion (41) so that the second end portion (40) is positioned remotely from the support element, the second end portion (40) comprising a retainer formation (42) which is of plastic and which is configured to be engaged by a retainer element such that, in use, the attachment element (37) couples the air-bag module (14) to the vehicle support structure and the retainer element retains the air-bag module (14) in a position adjacent to the vehicle support structure.

2. The mounting arrangement of claim 1, wherein the retainer formation (42) is a substantially hook-shaped formation.

3. The mounting arrangement of any one of claim 1 or claim 2, wherein the first end portion (39) of the attachment element (37) is releasably attached to the base element (15).

4. The mounting arrangement of claim 3, wherein the attachment element (37) is locked in engagement with the base element by a locking element (48).

5. The mounting arrangement of claim 1, wherein the first end portion (39), the intermediate portion (41) and the second end portion (40) of the attachment element (37) are of plastic and formed integrally with one another.

6. The mounting arrangement of claim 1, wherein the air-bag module (14) further comprises:
a gas generator (19) which is coupled to at least one support member (20, 21) that is carried by the base element (15).

7. The mounting arrangement of claim 6, wherein the at least one support member (20, 21) comprises a damper element which is configured to damp vibrational movement of the gas generator (19).

8. The mounting arrangement of any one of the preceding claims, wherein the air-bag module (14) further comprises:
a diffuser element (28) which is of metal and which is carried by the central support member (50).

9. The mounting arrangement of any one of claims 1 to 7, wherein the air-bag module further comprises:
a diffuser element (59) which is of plastic and which is formed integrally with the central support member (50).

## Patentansprüche

1. Montageanordnung zur Montage eines Airbagmoduls an einer Fahrzeugträgerstruktur, wobei die Montageanordnung Folgendes umfasst:
ein Airbagmodul (14), das Folgendes enthält:
ein Basiselement (15);
ein zentrales Trägerelement (50), das aus Kunststoff besteht und von dem Basiselement (15) getragen wird; und
mindestens eine Seitenwand (17), wobei die Seitenwand (17) aus Metall besteht und von dem Basiselement (15) getragen wird; und
mehrere voneinander beabstandete längliche Befestigungselemente (37, 38), die jeweils Folgendes enthalten:
einen ersten Endabschnitt (39), der einstückig mit dem zentralen Trägerelement (50) ausgebildet ist; und
einen zweiten Endabschnitt (40), der durch einen Zwischenabschnitt (41) mit dem ersten Endabschnitt (39) gekoppelt ist, so dass der zweite Endabschnitt (40) von dem Trägerelement entfernt positioniert ist, wobei der zweite Endabschnitt (40) eine Halteeinrichtung (42) aufweist, die aus Kunststoff besteht und dazu konfiguriert ist, mit einem Halteelement in Eingriff gebracht zu werden, so dass das Befestigungselement (37) das Airbagmodul (14) bei der Anwendung mit der Fahrzeugträgerstruktur koppelt und das Halteelement das Airbagmodul (14) in einer an die Fahrzeugträgerstruktur angrenzenden Position hält.

2. Montageanordnung nach Anspruch 1, wobei die Halteeinrichtung (42) eine im Wesentlichen hakenförmige Einrichtung ist.

3. Montageanordnung nach einem der Ansprüche 1 oder 2, wobei der erste Endabschnitt (39) des Befestigungselements (37) lösbar an dem Basiselement (15) befestigt ist.

4. Montageanordnung nach Anspruch 3, wobei das Befestigungselement (37) durch ein Verriegelungselement (48) mit dem Basiselement in Eingriff verriegelt ist.

5. Montageanordnung nach Anspruch 1, wobei der erste Endabschnitt (39), der Zwischenabschnitt (41) und der zweite Endabschnitt (40) des Befestigungselements (37) aus Kunststoff bestehen und einstückig miteinander ausgebildet sind.

6. Montageanordnung nach Anspruch 1, wobei das Airbagmodul (14) ferner Folgendes umfasst:
einen Gasgenerator (19), der mit mindestens einem Trägerelement (20, 21), das von dem Basiselement (15) getragen wird, gekoppelt ist.

7. Montageanordnung nach Anspruch 6, wobei das mindestens eine Trägerelement (20, 21) ein Dämpferelement umfasst, das dazu konfiguriert ist, die Schwingungsbewegung des Gasgenerators (19) zu dämpfen.

8. Montageanordnung nach einem der vorhergehenden Ansprüche, wobei das Airbagmodul (14) ferner Folgendes umfasst:
ein Diffusorelement (28), das aus Metall besteht und von dem zentralen Trägerelement (50) getragen wird.

9. Montageanordnung nach einem der Ansprüche 1 bis 7, wobei das Airbagmodul ferner Folgendes umfasst:
ein Diffusorelement (59), das aus Kunststoff besteht und einstückig mit dem zentralen Trägerelement (50) ausgebildet ist:

## Revendications

1. Agencement de montage destiné au montage d'un module de coussin gonflable de sécurité sur une structure de support d'un véhicule, l'agencement de montage comprenant:
un module de coussin gonflable de sécurité (14) qui comporte:
un élément de base (15);
un organe de support central (50) qui est constitué de matière plastique et porté par l'élément de base (15); et
au moins une paroi latérale (17), la paroi latérale (17) étant constituée de métal et portée par l'élément de base (15); et
une pluralité d'éléments de fixation (37, 38) allongés espacés, qui comportent chacun:
une première partie d'extrémité (39) qui est formée d'un seul tenant avec l'organe de support central (50), et
une seconde partie d'extrémité (40) qui est reliée à la première partie d'extrémité (39) par une partie intermédiaire (41) de sorte que la seconde partie d'extrémité (40) est placée à distance de l'élément de support, la seconde partie d'extrémité (40) comprenant une formation de retenue (42) qui est constituée de matière plastique et conçue pour recevoir en prise un élément de retenue de telle sorte que, à l'utilisation, l'élément de fixation (37) relie le module de coussin gonflable de sécurité (14) à la structure de support du véhicule et l'élément de retenue retient le module de coussin gonflable de sécurité (14) dans une position adjacente à la structure de support du véhicule.

2. Agencement de montage selon la revendication 1, dans lequel la formation de retenue (42) est une formation sensiblement en forme de crochet.

3. Agencement de montage selon l'une quelconque des revendications 1 et 2, dans lequel la première partie d'extrémité (39) de l'élément de fixation (37) est fixée de manière détachable à l'élément de base (15).

4. Agencement de montage selon la revendication 3, dans lequel l'élément de fixation (37) est verrouillé en prise avec l'élément de base par un élément de verrouillage (48).

5. Agencement de montage selon la revendication 1, dans lequel la première partie d'extrémité (39), la partie intermédiaire (41) et la seconde partie d'extrémité (40) de l'élément de fixation (37) sont constituées de matière plastique et formées d'un seul tenant les unes avec les autres.

6. Agencement de montage selon la revendication 1, dans lequel le module de coussin gonflable de sécurité (14) comprend en outre:
un générateur de gaz (19) qui est couplé à au moins un organe de support (20, 21) porté par l'élément de base (15).

7. Agencement de montage selon la revendication 6, dans lequel l'au moins un organe de support (20, 21) comprend un élément amortisseur qui est conçu pour amortir le mouvement vibratoire du générateur de gaz (19).

8. Agencement de montage selon l'une quelconque des revendications précédentes, dans lequel le module de coussin gonflable de sécurité (14) comprend en outre:
un élément diffuseur (28) qui est constitué de métal et porté par l'organe de support central (50).

9. Agencement de montage selon l'une quelconque des revendications 1 à 7, dans lequel le module de coussin gonflable de sécurité comprend en outre:
un élément diffuseur (59) qui est constitué de matière plastique et formé d'un seul tenant avec l'organe de support central (50).
